# EUROPÄISCHE PATENTSCHRIFT

(11) **EP 2 686 861 B1**
(45) Veröffentlichungstag und Bekanntmachung des Hinweises auf die Patenterteilung: **14.01.2015**
(21) Anmeldenummer: 12734838.1
(22) Anmeldetag: 20.06.2012
(51) Int. Cl.: H01H 71/16, B23K 9/00

(54) **ÜBERLASTAUSLÖSER, INSBESONDERE FÜR EINEN LEISTUNGSSCHALTER**
OVERLOAD TRIP DEVICE, IN PARTICULAR FOR A CIRCUIT BREAKER
DISPOSITIF DE DÉCLECHEMENT DE SURINTENSITÉ, EN PARTICULIER POUR UN DISJONCTEUR

(30) Priorität: 05.07.2011 DE 102011078634
(43) Veröffentlichungstag der Anmeldung: 22.01.2014
(73) Patentinhaber: Siemens Aktiengesellschaft, 80333 München (DE)
(72) Erfinder: DÜRR, Andreas, 92224 Amberg (DE); LAUMER, Xaver, 93489 Schorndorf (DE)
(86) Internationale Anmeldenummer: PCT/EP2012/061869
(87) Internationale Veröffentlichungsnummer: WO 2013/004505

(56) Entgegenhaltungen:
- EP-A1- 0 780 021
- DE-A1- 4 336 000
- GB-A- 1 230 398

## Beschreibung

Die Erfindung betrifft einen Überlastauslöser, insbesondere für einen Leistungsschalter mit einem Metallstreifen aus mindestens zwei unterschiedlichen Metallarten, um welchen ein Heizleiter gewickelt ist, wobei zwischen Metallstreifen und Heizleiter ein elektrischer Isolator angeordnet ist.

In elektromechanischen Schutzgeräten, insbesondere in Leistungsschaltern, werden Bimetall- beziehungsweise Trimetallstreifen als Überlastauslöser verwendet. Um die gewünschte Auslösecharakteristik zu erreichen, weisen die Metallstreifen in der Regel entweder eine Heizwicklung oder ein Heizpaket auf.

Bei Heizwicklungen handelt es sich um Metalldrähte oder Bänder, die um den Bimetallstreifen gewickelt sind. Zwischen Bimetallstreifen und Heizwicklung befindet sich ein elektrischer Isolator, zum Beispiel Glasseidengewebe, um einen Kurzschluss der einzelnen Heizleiterwicklungen zum Bimetallstreifen zu verhindern. Am oberen Ende des Bimetallstreifens sind Heizleiter und Bimetall miteinander verschweißt.

Bei Heizpaketen handelt es sich um ein Metallband, das zu einem Paket zusammengefaltet und am Bimetallstreifen befestigt ist. Zwischen den einzelnen Faltungen befindet sich ein elektrischer Isolator wie zum Beispiel Glimmerplättchen, so dass das Metallband des Heizpakets in seiner gesamten Länge vom Strom durchflossen wird. Bei Bimetall- beziehungsweise Trimetallstreifen mit Heizwicklung wird das Bimetall von Strom durchflossen. Dagegen fließt bei Bimetallstreifen mit Heizpaket in der Regel kein Strom durch das Bimetall. Das Strom durchflossene Heizpaket beheizt das Bimetall nur indirekt. Daher ist hier keine Speisung zwischen Heizpaket und Bimetall erforderlich.

Die Herstellkosten für gewickelte Bimetallstreifen sind niedriger als die für paketierte Bimetallstreifen. Verantwortlich dafür sind die leichtere Automatisierbarkeit, der geringere Materialbedarf und die einfachere montage- und schweißtechnische Integration des gewickelten Bimetallstreifens in die Strombahn des zugehörigen Geräts. Aus diesem Grund ist man bestrebt, vorzugsweise gewickelte Bimetallstreifen zu verwenden.

Der Einsatz von gewickelten Bimetallstreifen findet jedoch vor allem in der Schweißbarkeit der erforderlichen Bimetallund Heizleiterwerkstoffe seine Grenzen. Hier wird das Widerstandspressschweißverfahren angewendet. Während man diejenigen Werkstoffe, die in Schutzgeräten niedriger Einstellbereiche eingesetzt werden, relativ gut schweißen kann, nimmt die Schweißbarkeit von Werkstoffen, die für hohe Einstellbereiche erforderlich sind, stark ab. Daher findet man gewickelte Bimetallstreifen vorwiegend bei Geräten mit niedrigen Einstellbereichen. Paketierte Bimetallstreifen werden in Geräten mit höheren Einstellbereichen verwendet.

Wenn es technisch möglich wäre, auch die Werkstoffe schweißtechnisch verbinden zu können, die bei Bimetallstreifen für hohe Einstellbereiche erforderlich sind, könnten gewickelte Bimetallstreifen eine Reihe von paketierten Bimetallstreifenausführungen ablösen. Dadurch würde man eine Reduzierung der Herstellkosten erreichen.

Die Probleme, die sich beim Widerstandspressschweißen von Werkstoffen ergeben, welche in Bimetallstreifen für hohe Einstellbereiche erforderlich sind, werden oft durch Verwendung von paketierten Bimetallstreifen umgangen. Dabei müssen jedoch die höheren Herstellkosten in Kauf genommen werden. Weiterhin wird versucht, die Einstellbereichsgrenze, für die noch gewickelte Bimetallstreifen verwendet werden können, durch Verfeinerung des Widerstandspressschweißverfahrens möglichst weit nach oben zu verschieben. Maßnahmen, die in diese Richtung gehen, bestehen zum Beispiel darin, die Wechselstromtechnik durch besser steuerbar geregelte Gleichstromtechnik (Inverter) bei den Schweißstromquellen zu ersetzen, bessere Werkstoffe für die Schweißelektrode zu verwenden oder gesteuerte Schweißzangen mit Servoantrieb (Motorkopf)und integrierter Überwachung von Schweißkraft, Nachsetzbewegung und Nachsetzweg einzusetzen. Weitere Maßnahmen bestehen in der Nacharbeit von auftretenden Schweißspritzern, in der verstärkten zerstörenden Stichprobenprüfung auf Schweißfestigkeit oder aber in der Inkaufnahme von geringen Elektrodenstandzeiten (zum Beispiel 200 Schweißungen). Darüber hinaus werden die Heizwicklungen oft so dimensioniert, dass eine verschweißte Fläche von 50% des Heizleiterquerschnitts ausreicht, um den Strom zu tragen. Dies verursacht höheren Materialeinsatz und damit höhere Kosten. Zu berücksichtigen ist außerdem, dass bei schlecht schweißbaren Werkstoffpaarungen verschweißte Flächen von 100% des stromführenden Heizleiterquerschnitts praktisch mit dem Widerstandspressschweißverfahren nicht herzustellen sind.

GB 1 230 398 A offenbart ein Verfahren gemäß dem Oberbegriff des Anspruchs 1.

Demgemäß besteht die Aufgabe der vorliegenden Erfindung darin, einen Überlastauslöser, insbesondere für einen Leistungsschalter zu beschaffen, der eine optimierte Verbindung zwischen Metallstreifen und Heizleiter bei höheren Einstellbereichen aufweist.

Diese Aufgabe wird durch ein Verfahren gemäß Patentanspruch 1 gelöst.

Erfindungsgemäß wird diese Aufgabe durch einen Überlastauslöser, insbesondere für einen Leistungsschalter gelöst mit einem Metallstreifen aus mindestens zwei unterschiedlichen Metallarten, um welchen ein Heizleiter gewickelt ist, wobei zwischen Metallstreifen und Heizleiter ein elektrischer Isolator angeordnet ist. Die Erfindung zeichnet sich dabei dadurch aus, dass der Heizleiter am Metallstreifen über eine Lichtbogen-Schweißung angeschweißt ist.

Durch den Ersatz von Widerstandspressschweißen durch ein Lichtbogen-Schweißverfahren wie beispielsweise dem Wolfram-Inertgas-Schweißen (WIG) lassen sich viele bei hohen Einstellbereichen eingesetzte Werkstoffe gut verbinden. Für das Widerstandspressschweißen galt, dass Werkstoffkombinationen mit weit auseinander liegenden Schmelzpunkten, Werkstoffe mit hoher elektrischer und thermischer Leitfähigkeit sowie Werkstoffe mit schwankenden Übergangswiderständen, zum Beispiel durch Oxidschichten an der Oberfläche, problematisch sind.

Bezüglich dieser Probleme ist das WIG-Schweißen deutlich unempfindlicher. Die Prozesswärme wird hier berührungslos durch einen Lichtbogen erzeugt, so dass Oxide an der Oberfläche kaum stören. Durch die hohen Temperaturen des Lichtbogens werden auch Werkstoffkombinationen mit weit auseinander gehenden Schmelzpunkten gemeinsam aufgeschmolzen. Die elektrischen und thermischen Leitfähigkeiten haben beim WIG-Schweißen keinen so hohen Einfluss auf den Schweißprozess wie dies beim Widerstandspressschweißen der Fall ist.

Weiterhin kommen bei hohen Einstellbereichen vorwiegend Trimetall-Werkstoffe statt Bimetall-Werkstoffe zum Einsatz, das heißt, die Aktivseite und die Passivseite sind durch eine dritte Metallschicht getrennt. Meist handelt es sich dabei um eine Schicht aus Kupfer oder einer Kupferlegierung. Diese Schicht bereitet beim Widerstandspressschweißen zusätzliche Probleme. Sie ist in der Regel niedrig schmelzender als die beiden außen liegenden Metallschichten. Beim Schweißen wird jedoch der Schmelzpunkt der außen liegenden Schichten erreicht. Auf Grund der unmittelbaren Nachbarschaft wird auch die niedrig schmelzende Kupferschicht oft mit aufgeschmolzen, was unerwünschte Schweißspritzer und die Gefahr des Festklebens der Bimetallstreifen an den Schweißelektroden zur Folge hat. Der Prozess ist daher schlecht beherrschbar. Insbesondere die bei hohen Einstellbereichen erforderlichen großen verschweißten Flächen zwischen Bimetall und Heizleiter zur Gewährleistung der Stromtragfähigkeit im späteren Schaltgerät, bedingen Großschweißströme und Leistungen. Dies führt bei geringen Abweichungen in den Übergangswiderständen der zu verschweißenden Partner zu relativ starken Schwankungen der eingebrachten Prozesswärme, die sich in einer schwankenden Schmelzbildung äußert.

Vorteilhaft beim Lichtbogen-Schweißverfahren wie beispielsweise dem WIG-Schweißprozess ist hier zum Einen, dass es verfahrensbedingt kaum zu Schweißspritzern kommt, zum Anderen lassen sich durch eine stirnseitige WIG-Schweißung am Trimetallstreifen die innere Kupferschicht und der meist aus Kupfer oder einem Kupferwerkstoff bestehende Heizleiter direkt verbinden, was beim Widerstandspressschweißen nicht möglich ist. Durch die niedrigen Widerstände der so verbundenen Kupferwerkstoffe sinkt der innere Widerstand der Schweißung im späteren Schaltgerät. Dadurch sind auch nur kleinere verschweißte Flächen zur Stromtragfähigkeit erforderlich, wodurch die Sicherheit der Verbindung erhöht wird. Zudem konnte gezeigt werden, dass mit dem WIG-Schweißprozess relativ einfach 100% des Heizleiterquerschnitts mit dem Bimetall verschweißt werden können.

Neben einem stabileren Prozess weist das WIG-Schweißen damit auch günstigere elektrische Eigenschaften an der erzeugten Verbindung auf. Durch die Möglichkeit bislang kaum schweißbare Werkstoffkombinationen verbinden zu können, ist eine Substitution von paketierten durch gewickelte Bimetallstreifen erzielbar. Damit lässt sich eine Reduzierung der Herstellkosten erreichen.

Das Wolfram-Inertgas-Schweissverfahren zeichnet sich gegenüber anderen Schmelzschweißverfahren durch eine Reihe von Vorteilen aus. In Verbindung mit dem WIG-Pulsschweißen und WIG-Wechselstromschweißen lässt sich jeder Schmelzschweiß geeignete Werkstoff fügen. Beim WIG-Schweißen entstehen praktisch keine Schweißspritzer. Die gesundheitliche Belastung durch Schweißrauche ist verhältnismäßig gering.

Ein besonderer Vorteil des WIG-Schweißens ist, dass nicht mit einer abschmelzenden Elektrode gearbeitet wird. Die Zugabe von Schweißzusatz und die Stromstärke sind deshalb entkoppelt. Der Schweißer kann seinen Schweißstrom optimal auf die Schweißaufgabe abstimmen und muss nur soviel Schweißzusatz zugeben, wie gerade erforderlich ist. Dies macht das Verfahren besonders geeignet zum Schweißen von Wurzellagen und zum Schweißen in Zwangslagen. Durch den verhältnismäßig geringen und kleinräumigen Wärmeeintrag ist der Schweißverzug der Werkstücke geringer als bei anderen Verfahren. Wegen der hohen Schweißnahtgüten wird das WIG-Verfahren bevorzugt dort eingesetzt, wo die Schweißgeschwindigkeiten gegenüber den Qualitätsanforderungen zurücktreten.

Die WIG-Schweißanlage besteht aus einer Stromquelle, die in den meisten Fällen auf Gleich- oder Wechselstromschweißen geschaltet werden kann, und einem Schweißbrenner, der mit der Stromquelle durch ein Schlauchpaket verbunden ist. Im Schlauchpaket befinden sich die Schweißstromleitungen, die Schutzgaszuführungen, die Steuerleitung und bei größeren Brennern der Zu- und Rücklauf des Kühlwassers.

Es gibt zwei Arten, den Lichtbogen zu zünden, die Kontaktund die Hochfrequenzzündung. Bei der Kontaktzündung (Streichoder Anreißzündung) wird ähnlich den Elektrodenspalten die Wolfram-Elektrode kurz, ähnlich einem Streichholz, am Werkstück angestrichen und somit ein Kurzschluss erzeugt. Nach dem Abheben der Elektrode vom Werkstück brennt der Lichtbogen zwischen Wolfram-Elektrode und Werkstück. Es besteht die Möglichkeit, dass bei jedem Zünden etwas Material von der Wolfram-Elektrode hängen bleibt, das wegen der höheren Schmelztemperaturen des Wolframs als Fremdkörper im Schmelzbad zurückbleibt. Deshalb würde häufig eine separate Kupferplatte, auf dem Werkstück liegend, zum Zünden verwendet.

Die Hochfrequenzzündung hat die Streichzündung praktisch vollständig ersetzt. Bei der Hochfrequenzzündung wird mit Hilfe eines Hochspannungsimpulsgenerators, der eine hohe Spannung auf die Wolfram-Elektrode gibt, das Gas zwischen Elektrode und Werkstück ionisiert, wodurch der Lichtbogen gezündet wird. Der Hochspannungsimpulsgenerator hat eine ungefährliche Stromstärke.

Eine Variante der Kontaktzündung ist die Lift-Arc-Zündung. Die Elektrode wird direkt an der Schweißstelle auf dem Werkstück aufgesetzt. Es fließt ein geringerer Strom, der nicht ausreicht, die Elektrode zu beschädigen. Beim Abheben des Brenners zündet der Plasmalichtbogen und die Elektronik der Schweißmaschine erhöht den Strom auf Schweißstromstärke. Vorteil dieser Methode ist das Vermeiden elektromagnetischer Störungen, die bei der Hochfrequenzzündung auftreten können.

Meist wird zum Schweißen das Edelgas Argon, seltener Helium oder ein Gemisch aus beiden Gasen eingesetzt. Dadurch wird das verhältnismäßig teure Helium auf Grund seiner besseren Wärmeleitfähigkeit verwendet, um die Wärmeeinbringung zu erhöhen. Das Schutzgas wird durch die Gasdüse zur Schweißstelle geleitet. Beim WIG-Schweißen kann sowohl mit als auch ohne Zusatzwerkstoff gearbeitet werden. Zum manuellen Schweißen werden wie beim Gasschmelzschweißen meist stabförmige Zusätze verwendet. Verwechslungen mit den Gasscheißstäben müssen allerdings unbedingt vermieden werden, da die chemischen Zusammensetzungen voneinander abweichen.

Bei der WIG-Schweißung unterscheidet man Gleich- und Wechselstromschweißen. Das Gleichstromschweißen mit negativ gepolter Elektrode wird zum Schweißen von Stählen aller Art und deren Legierung eingesetzt. Demgegenüber wird das Wechselstromschweißen vorwiegend zum Schweißen der Leichtmetalle Aluminium und Magnesium eingesetzt. In Sonderfällen werden Leichtmetalle auch mit Gleichstrom und mit einer positiven Elektrode geschweißt. Dabei werden Spezialschweißbrenner mit einer sehr dicken Wolfram-Elektrode und Helium als Schutzgas verwendet.

Wichtig ist die Pluspolung der Wolfram-Elektrode bei Leichtmetallen, da diese zumeist eine harte Oxidschicht mit sehr hohem Schmelzpunkt wie bei Aluminiumoxid oder Magnesiumoxid auf ihrer Oberfläche bilden. Diese Oxidschicht wird bei einer Minuspolung des Werkstücks aufgebrochen, da das Werkstück nun als Elektronen emittierender Pol fungiert und negative Sauerstoffionen abgeführt werden.

Eine Weiterentwicklung des WIG-Schweißens ist das Schweißen mit pulsierendem Strom. Dabei pulsiert der Schweißstrom zwischen einem Grund- und Impulsstrom mit variablen Frequenzen, Grund- und Impulsstromhöhen und -breiten. Die Pulsfrequenz, die Impulsbreite und die Impulshöhe, sind getrennt voneinander einstellbar. Das WIG-Pulsen mit variablem Stromverlauf kann nur mit einer besonderen Schweißanlage (Schweißinverter) durchgeführt werden. Die fein dosierbare Wärmeeinbringung beim WIG-Impulsschweißen ermöglicht eine gute Spaltüberbrückung, eine gute Wurzelschweißung und ein gutes Schweißen in Zwangslagen. Schweißnahtfelder am Nahtanfang und Nahtende wie beim Rohrschweißen werden vermieden.

Die Erfindung zeichnet sich dadurch aus, dass das Prinzip der Widerstandserwärmung durch das Prinzip des berührungslosen Aufschmelzens durch einen elektrischen Lichtbogen beim Verbinden von Heizleiter und Bimetall mittels Schweißung ersetzt wird. Die Vorteile einer WIG-Schweißverbindung zwischen Heizleiter und Bimetallen bestehen darin, dass die Schweißbarkeit von bislang kaum schweißbaren Werkstoffkombinationen möglich ist sowie ein stabilerer Schweißprozess Anwendung findet. Es liegen zudem verbesserte elektrische Eigenschaften an der Schweißverbindung vor. Außerdem werden die Herstellkosten bei Schutzgeräten mit thermischen Auslösern in hohen Einstellbereichen durch die Automatisierbarkeit und die Reduzierung des Materialeinsatzes reduziert.

Weitere Vorteile und Ausführungen der Erfindung werden nachfolgend anhand eines Ausführungsbeispiels sowie anhand der Zeichnung erläutert.

Dabei zeigt schematisch:

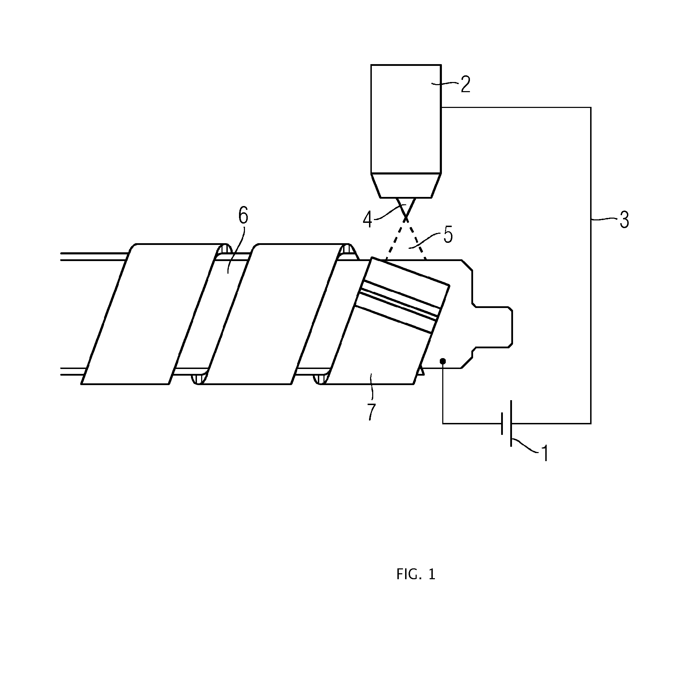

Fig. 1 in einer schematischen Darstellung den erfindungsgemäßen WIG-Schweißvorgang zwischen Heizleiter und Metallstreifen eines thermischen Überlastauslösers.

In Fig. 1 ist der Aufbau einer WIG-Schweißanlage dargestellt. Die WIG-Schweißanlage weist eine Stromquelle 1 auf, die in den meisten Fällen auf Gleich- oder Wechselstromschweißen geschaltet werden kann und einen Schweißbrenner 2, der mit der Stromquelle 1 durch ein Schlauchpaket 3 verbunden ist. Im Schlauchpaket 3 befinden sich die Schweißstromleiter, die Schutzgaszuführung, die Steuerleitung und bei größeren Brennern der Zu- und Rücklauf des Kühlwassers. Am Schweißbrenner 2 ist eine Wolfram-Elektrode 4 angeordnet, an welcher ein Lichtbogen 5 erzeugt wird. Der Lichtbogen 5 trifft auf die zwei zu verschweißenden Teile aus Metallstreifen 6 und Heizleiter 7. Bei dieser WIG-Schweißung treten kaum Spritzer auf, und es werden große verbundene Querschnitte erreicht.

Die Erfindung zeichnet sich dadurch aus, dass das Prinzip der Widerstandserwärmung durch das Prinzip des berührungslosen Aufschmelzens durch einen elektrischen Lichtbogen beim Verbinden von Heizleiter und Bimetall mittels Schweißung ersetzt wird. Die Vorteile einer WIG-Schweißverbindung zwischen Heizleiter und Bimetallen bestehen darin, dass die Schweißbarkeit von bislang kaum schweißbaren Werkstoffkombinationen möglich ist sowie ein stabilerer Schweißprozess Anwendung findet. Es liegen zudem verbesserte elektrische Eigenschaften an der Schweißverbindung vor. Außerdem werden die Herstellkosten bei Schutzgeräten mit thermischen Auslösern in hohen Einstellbereichen durch die Automatisierbarkeit und die Reduzierung des Materialeinsatzes reduziert.

## Patentansprüche

1. Verfahren zur Herstellung eines Überlastauslösers, insbesondere für einen Leistungsschalter mit einem Metallstreifen (6) aus mindestens zwei unterschiedlichen Metallarten, um welchen ein Heizleiter (7) gewickelt ist, wobei zwischen Metallstreifen (6) und Heizleiter (7) ein elektrischer Isolator angeordnet ist, **dadurch gekennzeichnet, dass** der Heizleiter (7) am Metallstreifen (6) über eine Wolfram-Inertgas-Schweißung (WIG-Schweißung) angeschweißt wird.

## Claims

1. Method for producing an overload release, in particular for a circuit breaker, comprising a metal strip (6) which is made of at least two different types of metal and around which a heating conductor (7) is wound, wherein an electrical insulator is arranged between the metal strip (6) and the heating conductor (7), **characterized in that** the heating conductor (7) is welded onto the metal strip (6) by means of tungsten inert-gas welding (TIG welding).

## Revendications

1. Procédé de fabrication d'un déclencheur de surcharge, notamment pour un disjoncteur, comprenant une lame de métal (6) formée d'au moins deux types de métal différents autour de laquelle est enroulé un conducteur chauffant (7), un isolant électrique étant placé entre la lame de métal (6) et le conducteur chauffant (7), **caractérisé en ce que** le conducteur chauffant (7) est soudé sur la lame de métal (6) par soudage sous gaz inerte avec électrode de tungstène (soudage TIG).
